# EUROPEAN PATENT SPECIFICATION

(11) **EP 1 456 439 B1**
(45) Date of publication and mention of the grant of the patent: **20.02.2008**
(21) Application number: 02804764.5
(22) Date of filing: 10.12.2002
(51) Int. Cl.: D01F 9/12, D01F 9/127

(54) **METHOD FOR PRODUCING MULTIFACETED GRAPHITIC NANOTUBES**
VERFAHREN ZUR HERSTELLUNG VIELFLÄCHIGER GRAPHITNANORÖHRCHEN
PROCEDE DE PRODUCTION DE NANOTUBES GRAPHITIQUES MULTIFACETTES

(30) Priority: 11.12.2001 US 15353
(43) Date of publication of application: 15.09.2004
(73) Proprietor: Catalytic Materials Ltd., Holliston, MA 01746 (US)
(72) Inventor: BAKER, R., Terry, K., Hopkinton, MA 01748 (US); RODRIGUEZ, Nelly, M., Hopkinton, MA 01748 (US)
(74) Representative: McKechnie, Neil Henry
(86) International application number: PCT/US2002/039437
(87) International publication number: WO 2003/050333

(56) References cited:
- WO-A-02/095097
- US-B1- 6 333 016

## Description

### BACKGROUND OF THE INVENTION

### Field of the Invention

This present invention relates to a method for producing high yields of high-purity multifaceted graphitic nanotubes wherein a mixture of CO and H₂ is reacted in the presence of a catalyst system comprised of at least one Co-containing oxide and at least one Group II metal-containing oxide at effective temperatures.

### Description of Related Art

Nanostructure materials, particularly carbon nanostructure materials, are quickly gaining importance for various potential commercial applications. Such applications include their use to store hydrogen, to serve as catalyst supports, to be useful in various batteries, and as reinforcing components for polymeric composites.

Carbon nanostructures, particularly carbon nanofibers, are typically produced by growing them from suitable supported or unsupported powdered metal catalysts at elevated temperatures, in the presence of hydrogen and an effective decomposing carbon-containing compound. Typically, the carbon-containing compound is selected from CO, methane, ethane, ethylene, acetylene, propane, propylene, butane, butene, butadiene, pentane, etc. While such a method is currently used to produce carbon nanostructures in substantial yields, the width of the nanostructures is difficult to control. Narrow width nanostructures are desirable. For example, the average width of a carbon nanostructure is dependent on the average size of the metal catalytic particle from which it was grown. This size typically ranges from about 25 to 450 nm from unsupported catalyst powders.

One attempt to overcome the difficulty of controlling carbon nanostructure width was to disperse catalytic metal particles over a suitable substrate, such as an amorphous carbon film, in order to produce carbon nanostructures having a more uniform narrower width. This met with some degree of success since a more uniform catalyst particle size dispersion was achieved. Although the carbon nanostructures resulting from such a method were found to have an average width about half that of those produced by more conventional techniques at the time, the yield of nanostructures was vastly reduced and unacceptable. In addition, the support material became an added impurity that should be avoided when such a method is used.

Thus, there is a need in the art for methods for producing high yields of carbon nanostructures, especially carbon nanofibers, having a substantially uniform narrow width.

### Summary of the Invention

In accordance with the present invention there is provided a method for producing multifaceted graphitic non-cylindrical nanotubes, which method comprises:
i) reacting a mixture of CH₄ and O₂ in a mole ratio of 2:1 in the presence of a catalyst system comprising a mixture of a Co-containing oxide and at least one Group II metal oxide at a temperature of from 350° to 1000°C to produce a mixture of CO and H₂; and
ii) reacting at least a portion of the mixture of CO and H₂ in a weight ratio of 20:1 in the presence of an unsupported catalyst system comprising a mixture of a Co-containing metal oxide and a Group II metal oxide at temperatures of from 350° to 1000°C thereby producing multifaceted graphitic nanotubes.

Further according to the present invention there is provided a multifaceted graphitic non-cylindrical nanotube comprising platelets oriented substantially parallel to the growth axis of the nanotube and having crystallinity of from 90% to 100% wherein the distance between graphite platelets is from 0.335 nm to 0.4 nm.

In a preferred embodiment of the present invention the temperature at which the graphitic nanotubes are grown is from 550°C to 700°C.

Multifaceted graphitic nanotubes may be produced by reacting a mixture of CO and H₂ in the presence of a catalyst system comprising a mixture of Co₃O₄-Co₂MgO₄-CoMgO₂ at effective temperatures to grow multifaceted graphitic nanofibers therefrom.

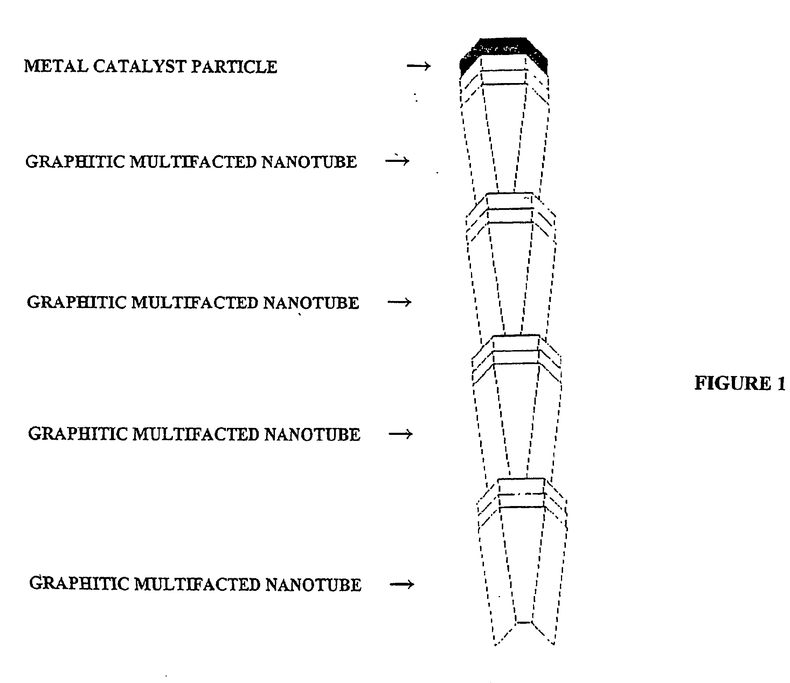

### Brief Description of the Figure

The sole figure hereof is a rough representation of the primary features of the carbon nanotubes produced in accordance with the present invention. It shows a non-cylindrical multifaceted tubular structure containing a substantial amount of edge sites growing from a metal catalyst particle. The tubular nanostructure also shows a tube within a tube structure.

### Detailed Description of the Invention

The propensity for carbon nanostructures to be formed during the interaction of a carbon-containing compound, such as hydrocarbons and carbon monoxide with hot metal surfaces is known. It has been recognized in recent years that a unique set of chemical and physical properties can be achieved if one controls the growth and structural characteristics of carbon nanostructures by the use of selected catalysts. The unusual properties exhibited by carbon nanostructured materials, coupled with the possibility of tailoring these properties as well as their dimension, have an impact on research activities associated with such carbon nanostructures. Of particular importance are carbon nanostructures having a relatively high graphitic content and narrow widths, since such nanostructures have a variety of potential commercial applications. Unfortunately, conventional methods for producing carbon nanostructures are not suitable for producing high yields of carbon nanostructures having relatively uniform narrow widths. The width of the carbon nanostructures is typically dictated by the size of the catalytic metal particles from which they are grown. This size, or width, of conventional carbon nanostructures, such as nanofibers, will typically range from 25 to 450 nm. Better control of, and narrower width nanostructures are highly desirable.

The multifaceted graphitic nanotubes of the invention will have their platelets oriented substantially parallel to the growth axis of the nanofibers in such a way that multifaceted non-cylindrical tubular structures are produced. The preferred nanotubes are those having properties that include: (i) a surface area of from 20 to 3,000 m²/g, preferably from 50 to 800 m²/g, more preferably from 100 to 700 m²/g, and most preferably from 250 to 350 m²/g, which surface area is determined by N₂ adsorption at - 196°C; (ii) a crystallinity from 90% to 100%, and ideally substantially 100%; and (iii) interstices of 0.335 nm to 0.40 nm, preferably 0.335 nm. The interstices are the distance between the graphite platelets. The shape of the resulting multifaceted nanotubes of the present invention can be any suitable shape. Non-limiting examples of preferred shapes include straight, branched, twisted, spiral, helical, and coiled. As previously mentioned, the graphitic platelets of the nanotubes of the present invention will be oriented substantially parallel to the growth, or longitudinal axis of the nanotubes and are multi-faceted tubular in structure. That is, they will have a structure that resembles a multi-faced pencil, or a so-called "Allen" wrench and will preferably be a non-cylindrical tube within a non-cylindrical tube structure. Further, the surface area of the graphitic carbon nanotubes can be increased by careful activation with a suitable etching agent, such as carbon dioxide, steam, or the use of a selected catalyst, such as an alkali or alkaline-earth metal. The terms "nanotubes" and "nanofibers" are used interchangeably herein. Nanotubes are one form of carbon nanofibers in which the graphite platelets are aligned substantially parallel to the longitudinal axis of the nanofibers.

The present invention relates to a novel method for the production of narrow width graphitic multifaceted nanotubes from the decomposition of CO/H₂ mixtures over a Co/Group II mixed metal oxide catalyst at effective temperatures of 350°C to 1000°C, preferably 550°C to 670°C. It has unexpectedly been found by the inventors hereof that the CO/H₂ mixture used for the production of the graphitic nanotubes can be generated via the decomposition of a CH₄/O₂ (∼ 2: 1) mixture over a mixed catalyst system comprised of at least one Co-containing oxide and at least one oxide from the Group II elements. This two-step procedure allows one to produce nanotubes by a relatively inexpensive route. The same catalyst can be used in both steps, or a second type of catalyst can be used for the production of the nanotubes.

The catalyst system required to generate the multifaceted graphitic nanotubes of the present invention from the CO/H₂ decomposition reaction should fulfil the following criteria:

(a) One of the two metal ions contained in the starting catalyst precursors must possess more than one oxidation state whereas the other component can posses only one oxidation state.

(b) The two metal ions must be capable of forming composite oxides and/or solid solutions during calcination in air.

(c) The relative amounts of the oxides must be capable of being changed by altering the calcination temperature.

(d) One of the oxides must be capable of being reduced to the metallic state by treatment in a suitable reactant at temperatures between about 400°C and 900°C.

(e) This reducible component must be capable of decomposing carbon monoxide into carbon.

(f) This reducible component must possess the capabilities for dissolving and allowing for the diffusion of carbon species.

The catalyst systems used in the present invention are preferably in powder form that can be represented by the formula CoₓM_{y}O, where M is a Group II metal selected from Mg, Ca, Sr and Ba (metals that contain only one oxidation state). Preferred Group II metals are Mg and Ca, with Mg being more preferred. A preferred catalyst is Co₃O-Co₂MgO₄-CoMgO₂.

Any suitable method can be used to prepare the mixed metal oxide catalyst systems of the present invention. In one preferred method, the mixed metal oxide catalysts are prepared from a metal oxide suspension in water or ethanol to which an aqueous or ethanol solution of cobalt is added. The slurry obtained is vigorously stirred at room temperature (about 22°C) until dryness or a thick paste is achieved. The solid or paste is further dried in an oven at about 120°C for 24 hours and then ground to a fine powder. The resulting solids are then calcined in flowing air at temperatures between 400°C to 1000°C for an effective period of time, such as from 1 to 6 hours, preferably from 2 to 4 hours.

In another preferred method the mixed oxide catalyst containing different amounts of Co is prepared by using citric acid. A desired ratio of a mixture of cobalt nitrate and magnesium or calcium nitrate is melted together with citric acid. Following this step, the mixture is evacuated under a suitable pressure, such as a pressure of 0.7 kPa at a suitable temperature, for example about 70°C until the point of dryness. The resulting solid is then heated in air at 160°C for 1.0 hours and then calcined in flowing air at temperatures between 400°C and 1000°C for an effective period of time, such as from 1 to 6 hours, preferably from 2 to 4 hours.

In yet a third preferred method of preparing the mixed metal oxide catalyst systems of the present invention the mixed metal oxides are prepared by coprecipitation of aqueous solutions of cobalt and the desired M' nitrates with potassium carbonate or ammonium hydroxide. The resulting filtrate is then washed with hot deionized water and dried overnight in air at effective temperatures. The resulting mixed solid carbonates are then calcined in flowing air at temperatures between 600°C and 1000°C for an effective period of time, such as from 1 to 6 hours, preferably from 2 to 4 hours.

In another preferred method, the oxide components, such as Co₃O₄, Co₂Mg O₄ and CoMgO₂ are separately prepared and mechanically mixed in the desired proportions using a ball-mill or any other means of blending. This method can also be used to prepare corresponding Fe or Ni-containing catalysts using the corresponding powdered metal oxides and mixed metal magnesium oxide compounds.

The carbon nanostructures of the present invention are catalytically grown from an unsupported mixture of at least one Co-containing oxide and at least one Group II metal oxide. The cobalt component is preferably in the metallic state and may comprise a single metal or an alloy or a bimetallic. Preferred Group II metals are Ca and Mg, with Mg being the more preferred. The weight ratio of Co-oxide to Group II metal oxide may be from 5:95 to 24:36. A mixture of CO and H₂ is decomposed in the presence of this mixed catalyst system at temperatures from 350°C to 1000°C, preferably from 450°C to 800°C, more preferably from 550°C to 700°C. It is also preferred that hydrogen be present during the decomposition of the carbon-containing compound.

One preferred process for producing the multifaceted graphitic nanotubes of the present invention is a two-stage process wherein the first stage is the preparation of the CO and H₂ mixture and the second stage is the growth of the multifaceted carbon nanotubes using the CO/H₂ mixture. Growth of the carbon nanotubes takes place by reacting the CO/H₂ mixture in the presence of the Co-containing oxide/Group II metal oxide catalyst system at suitable temperatures. In the first stage, a mixture of a CH₄ and O₂ is fed to a reaction zone containing a catalyst system comprising a Co-containing oxide component and Group II metal oxide wherein it is converted at a temperature from 350°C to 1000°C , preferably at temperatures from 450°C to 1000°C , and more preferably at temperatures from 600°C to 850°C for an effective amount of time to convert a substantial amount, preferably all, of the mixture of CH₄ and O₂ to CO and H₂. The mole ratio of CH₄ to O₂ must be 2: 1. The O₂ can be any suitable oxygen-containing gas and can be substantially pure O₂. Air can be used as the source of O₂ as long as the nitrogen is first removed. At least a portion of the product CO/H₂ product stream is then conducted to a second stage reaction zone containing a catalyst system comprised of Co and Group II metal oxide, preferably MgO where it is reacted at temperatures from 550°C to 700°C , preferably from 600°C to 700°C , more preferably from 600°C to 650°C for an effective amount of the time to produce multifaceted graphitic nanotubes. The weight ratio of CO to H₂ will be from 20 to 1, preferably from 10 to 1, and more preferably from 4 to 1. It was unexpectedly found by the inventors hereof that substantially all of the carbon nanostructures produced in accordance with the present process are the desired multifaceted non-cylindrical graphitic nanotubes. It was also found that the nanotubes will preferably be a layered nanostructure characterized as a non-cylindrical multifaceted nanotubes within a non-cylindrical multifaceted nanotube structure.

By graphitic we mean that the multifaceted nanotubes will be at least 5% graphitic, preferably at least 50% graphitic, more preferably at least 90% graphitic, and most preferably at least 95% graphitic. They will also have a relatively high number of active sites when compared with cylindrical nanotubes. By relatively high number we mean that the multifaceted nanotubes of the presently claimed invention will have at least 5%, preferably at least 10% and more preferably at least 15% of the exposed surfaces will be active sites and/or corners.

After the multifaceted carbon nanotubes are grown they can be treated with an aqueous solution of an inorganic acid, such as a mineral acid, to remove any excess catalyst particles. Non-limiting examples of mineral acids, which can be used, include sulfuric acid, nitric acid, and hydrochloric acid. Preferred is hydrochloric acid.

The edges of the graphite platelets may be etched with an appropriate etching agent, preferably carbon dioxide, steam, or a suitable catalyst such as an alkali or alkaline-earth metal.

The present invention will be illustrated in more detail with reference to the following examples, which should not be construed to be limiting in scope of the present invention.

### Example 1

This example demonstrates the importance of the interaction between the Co and M species is a critical factor for the synthesis of narrow-width, high purity multi-faceted graphitic carbon nanotubes. In this series of experiments the effect of the nature of the various Group VIII metals when mixed with MgO on the characteristics of the carbon nanotubes generated during the interaction of CO/H₂ (9:1) at 600°C over a 5-hour period has been investigated. In all cases, the amount of Co:Mg in the mixed oxide was maintained at 0.6:1 and the catalysts were initially calcined at 500°C and reduced at 600°C. X-ray diffraction analysis was performed on each system after the calcination step.

From the data presented in Table 1 above it can be seen that different oxide species are formed from Fe, Co and Ni precursors and that the yields and characteristics of the carbon nanotube products exhibit massive variations. For example, in the case of Fe, the interaction between the Group VIII metal and M is relatively weak and separate oxides are formed, which culminate in the formation of very large nanotubes. At the other extreme, the interaction between the two oxides of Ni and Mg is very strong and a solid solution, NiMgO₂, is formed, which generates small-width nanotubes, but in very low yield. Finally, when Co and Mg undergo interaction in an oxidizing environment, three Co-containing species are formed which coexist in the active catalyst. This formulation produces a high yield of very small-width nanotubes. It is evident that the interaction between Co and Mg oxides generates the ideal catalyst composition for the generation of the desired product.

**TABLE 1**

| **Metal** | **Reactive Species** | **Average Width CNT (nm)** | **(g-CNT/g-Catalyst)** |
|---|---|---|---|
| Fe | Fe₂O₃/MgO | 103.7 | 31.2 |
| Ni | NiMgO₂ | 13.8 | 3.1 |
| Co | Co₃O₄/Co₂MgO₄/ CoMgO₂ | 8.1 | 89.5 |
| Where CNT = carbon (graphitic) nanotubes. | | | |

### Example 2

In this series of experiments, the mixed metal oxide catalyst, CoₓMg_{y}O (x:y = 0.6:1), was calcined at various temperatures over the range 500°C to 850°C. All catalyst powders were reduced in H₂ at 850°C and subsequently reacted in a CO/H₂ (4:1) mixture at 600°C for 2.0 hours to produce multi-faceted graphitic nanotubes. The performance in terms of the amount of nanotubes formed and width of these structures is presented in Table 2 below. From these data it is evident that the highest amounts of nanotubes were obtained from a mixed oxide catalyst that had been calcined at 500°C. On the other hand, the narrowest width structures were produced from the solid solution catalyst that had been calcined at 850°C.

**TABLE 2**

| **Calcination Temp (°C)** | **Reduction Temp (°C)** | **(g-CNT/g-Catalyst)** | **CNT width range (nm)** | **Average width CNT (nm)** |
|---|---|---|---|---|
| 500 | 850 | 35.0 | 2.5 - 23.0 | 8.7 |
| 700 | 850 | 8.0 | 2.5 - 20.0 | 7.5 |
| 850 | 850 | 1.0 | 2.5 - 15.0 | 5.7 |

### Example 3

In a complementary series of experiments, the mixed metal oxide catalyst, CoₓMg_{y}O (x:y = 0.6:1), was calcined at various temperatures over the range 500 to 850°C. X-ray diffraction analysis was performed on each system after the calcination step. All catalyst powders were reduced in H₂ at 850°C and subsequently reacted in a CO/H₂ (4:1) mixture at 600°C for 2.0 hours to produce multi-faceted graphitic nanotubes.

**TABLE 3**

| **Calcination Temp (°C)** | **Reactive Species** | **(g-CNT/g-Catalyst)** |
|---|---|---|
| 500 | Co₃O₄/Co₂MgO₄/CoMgO₂ | 35.0 |
| 850 | CoMgO₂ | 1.0 |

From the data presented in Table 3 above, it is apparent that changing the calcination temperature can control the nature of the interaction between Co and Mg in the CoxMgyO system. This treatment can exert a substantial effect on the subsequent catalytic activity of the mixed oxide towards nanotube growth characteristics during reaction with CO/H₂ at 600°C.

### Example 4

In this series of experiments the calcination temperature of the mixed metal oxide catalyst, CoₓMg_{y}O (x:y = 0.6:1), was maintained constant at 500°C while the reduction temperature was varied over the range of 450° to 1000°C. These catalysts were then reacted in a CO/H₂ (9:1) mixture at 600°C for 2.0 hours. The amounts and widths of the nanotubes produced from each system are given in Table 4. From these data it is evident that the highest amounts and narrowest widths of nanotubes are obtained from catalysts prepared from mixed metal oxides that were reduced between 450°C to 750°C, with the most preferred temperature being 600°C.

**TABLE 4**

| **Reduction Temp (°C)** | **(g-CNT/g-Catalyst)** | **CNT width range (nm)** | **Average width CNT (nm)** |
|---|---|---|---|
| 450 | 41.0 | 3.0 - 22.0 | 9.0 |
| 550 | 43.0 | 2.5 - 25.0 | 8.8 |
| 600 | 45.0 | 2.5 - 22.0 | 8.0 |
| 650 | 44.0 | 3.0 - 26.0 | 9.1 |
| 750 | 41.0 | 3.0 - 22.0 | 8.2 |
| 850 | 30 | 2.5 - 27.0 | 8.4 |
| 1000 | 6 | 2.5 - 31.0 | 9.0 |

### Example 5

In this set of experiments the calcination and reduction temperatures of the mixed metal oxide catalyst, CoₓMg_{y}O (x:y = 0.6:1), were maintained constant at 500°C and 600°C, respectively. The time of the reduction step was systematically varied from 0.5 to 2.0 hours. Subsequently, the various catalysts were reacted in CO/H₂ (9:1) at 600°C for 5 hours. The amounts and characteristics of the multi-faceted graphitic nanotubes produced during this process are recorded in Table 5 below.

**TABLE 5**

| **Reduction Time (h)** | **(g-CNT/g-Catalyst)** | **Average width CNT (nm)** |
|---|---|---|
| 0.5 | 78.0 | 6.8 |
| 1 | 89.5 | 7.1 |
| 2 | 89.1 | 7.2 |

From these data it is evident that the catalyst attains optimum activity after a 1.0-hour reduction at 600°C and further treatment does not have any beneficial effects on the performance of the system.

### Example 6

Catalyst powders, CoₓMg_{y}O (x:y = 0.6:1), that were prepared from calcination at 500°C followed by reduction at 600°C were reacted in CO/H₂ (9:1) mixtures at various temperatures for 2.0 hour periods. The data given in Table 6 below shows the amounts and widths of the nanotubes formed from this mixture at 550°C to 650°C. It is clear that the best conditions are achieved when the reaction is performed at 600°C.

**TABLE 6**

| **Reaction Temp (°C)** | **(g-CNT/g-Catalyst)** | **CNT width range (nm)** | **Average width CNT (nm)** |
|---|---|---|---|
| 550 | 39.0 | 2.5 - 22.0 | 7.7 |
| 600 | 45.0 | 2.5 - 24.0 | 8.0 |
| 650 | 37.0 | 4.0 - 34.0 | 11.5 |

### Example 7

This set experiments was designed to examine the effect of the CO/H₂ ratio on the formation CNT over a CoₓMg_{y}O (x:y = 0.6:1) catalyst at 600°C for 2.0 hours. The mixed oxide catalyst was calcined at 500°C and reduced at 850°C and then reacted in various CO/H₂ mixtures at a flow rate of 200cc/min.

Inspection of the results in Table 7 above shows that the highest amounts of nanotubes were obtained with CO/H₂ mixtures containing a high fraction of CO and that the width of the structures was maintained at a constant level under these conditions. When hydrogen became the major gaseous component the yield of the solid carbon product exhibited a sharp decline and there was a corresponding increase in width of nanotubes. The preferred conditions are CO/H₂ ratio of between 39:1 and 2:1. The most preferred being between 19:1 1 and 4:1.

**TABLE 7**

| **CO:H₂ ratio** | **(g-CNT/g-Catalyst)** | **CNT width range (nm)** | **Average width CNT (nm)** |
|---|---|---|---|
| 100:1 | 19.0 | 4.0-37.0 | 12.6 |
| 39:1 | 37.0 | 3.0 - 25.0 | 9.5 |
| 19:1 | 38.0 | 2.5 - 24.0 | 8.9 |
| 12:1 | 36.0 | 2.5 - 23.0 | 8.6 |
| 9:1 | 36.0 | 2.5 - 23.0 | 8.6 |
| 4:1 | 35.0 | 2.5-24.0 | 8.7 |
| 2:1 | 32.0 | 4.0 - 29.0 | 11.9 |
| 1:1 | 29.0 | 5.0 - 39.0 | 17.0 |
| 2:3 | 17.0 | 5.0 - 44.0 | 20.7 |
| 1:2 | 4.0 | 5.0 - 49.0 | 22.4 |

### Example 8

In another set of experiments we have examined the effect of the composition of the mixed metal catalyst, CoₓMg_{y}O, on the growth characteristics of multi-faceted graphitic nanotubes from the decomposition of CO/H₂ (9:1) at 600°C for 2 hours. In each case the catalyst was calcined at 500°C and reduced at 600°C. Examination of the results presented in Table 8 above shows some important features. While the maximum yield of nanotubes is obtained from a catalyst composition of CoₓMg_{y}O (x:y = 0.6:1), the narrowest structures are grown from a powder where x:y = 0.1:1.

**TABLE 8**

| **x:y** | **(g-CNT/g-Catalyst)** | **CNT growth rate (g/h)** | **Average width CNT (nm)** |
|---|---|---|---|
| 0.1 | 9.0 | 4.5 | 5.4 |
| 0.2 | 36.0 | 18.0 | 6.2 |
| 0.4 | 39.0 | 19.5 | 7.6 |
| 0.6 | 46.0 | 23.0 | 8.0 |

### Example 9

The experiments that are reported in Example 8 were extended to cover a reaction period in CO/H₂ (9:1) at 600°C for up to 5.0 hours. As can be seen from Table 9 below, in most cases the amounts of nanotubes produced was increased substantially over a longer reaction time, however, there was a slight decrease in growth rate indicating that catalyst deactivation was occurring to some degree. The average widths of the nanotubes appeared to be independent of reaction time.

**TABLE 9**

| **x:y** | **(g-CNT/g-Catalyst)** | **CNT growth rate (g/h)** | **Average width CNT (nm)** |
|---|---|---|---|
| 0.1 | 9.0 | 1.8 | 5.6 |
| 0.2 | 52.0 | 10.4 | 6.2 |
| 0.4 | 78.0 | 15.6 | 7.5 |
| 0.6 | 90.0 | 18.0 | 8.0 |
| 1.0 | 65.0 | 13.0 | 8.8 |
| 1.8 | 53.0 | 10.6 | 10.0 |

### Example 10

In this set of experiments we have compared the performance of the CoₓMg_{y}O (x:y = 0.6:1) catalyst with that of conventional alumina and silica supported Co systems containing the same metal content. The data presented in Table 10 below shows that when these respective catalysts were reacted in CO/H₂ (9:1) mixtures at 600°C for 2.0 hours, the amounts of the desired solid carbon product formed were significantly lower on the traditional catalyst systems. While the widths of the nanotubes appear to be independent of the nature of the secondary metal oxide, the tendency to form undesirable "shell-like" deposits is overwhelming with samples containing either alumina or silica. XRD analysis showed the presence of only Co₃O₄ in the SiO₂- and Al₂O₃ supported catalyst samples. One may conclude that the coexistence of three Co-containing oxide species is a prerequisite for the growth of a large amount of narrow-width carbon nanotubes from the interaction of CO/H₂ at 600°C.

**TABLE 10**

| **Catalyst** | **Reactive Species** | **(g-CNT/g-Catalyst)** | **Average width CNT (nm)** | **% Shells** |
|---|---|---|---|---|
| Co_{0.6}MgO | Co₃O₄-CoMgO₄-CoMgO₂ | 45.0 | 8.0 | 0 |
| Co/Al₂O₃ | Co₃O₄ | 4.1 | 7.9 | 95 |
| Co/SiO₂ | Co₃O₄ | 1.1 | 7.6 | 50 |

### Example 11

In a further set of experiments we have investigated the influence of reaction time on the growth characteristics of multi-faceted graphitic nanotubes from the interaction of CoₓMg_{y}O (x:y = 0.6:1), with a CO/H₂ (9:1) mixture at 600°C. The mixed metal oxides were prepared by calcination at 500°C followed by reduction at 600°C.

**TABLE 11**

| **Reaction Time (hours)** | **(g-CNT/g-Catalyst)** | **Average width CNT (nm)** |
|---|---|---|
| 0.5 | 10.0 | 9.6 |
| 1.0 | 21.0 | 10.8 |
| 2.0 | 45.0 | 8.0 |
| 3.0 | 59.0 | 9.2 |
| 5.0 | 89.0 | 7.2 |
| 6.0 | 92.0 | 7.3 |
| 8.0 | 97.0 | 8.0 |

Inspection of these data, Table 11, reveals that the average rate of production of nanotubes is maintained almost constant up to a reaction time of 3.0 hours and starts to decline after this period of time. Within experimental error the width of the nanotubes remains constant over the entire reaction period.

### Example 12

The effect of reactant gas flow rate over the catalyst with respect to yield and growth characteristics of the multifaceted graphitic nanotubes. The change in the amounts of nanotubes formed when the flow rate of a CO/H₂ (9:1) mixture was passed over a CoₓMg_{y}O (x:y = 0.6:1) catalyst at 600°C for 5.0 hours was measured. From the data given in Table 12 it can be seen that the optimum flow rate occurs between 150 to 250 cc/min, with the most preferred level being 200 cc/min. On the other hand, within the flow rates utilized in these experiments there was no change in the average width of the nanotubes generated in these systems.

**TABLE 12**

| **CO:H₂ (9:1) Flow rate (cc/min)** | **(g-CNT/g-Catalyst)** | **Average width CNT (nm)** |
|---|---|---|
| 100 | 63.0 | 7.0 |
| 150 | 79.0 | 7.1 |
| 200 | 90.0 | 7.1 |
| 250 | 84.0 | 7.2 |

### Example 13

In these experiments the CoₓMg_{y}O (x:y = 0.6:1) catalyst sample that was prepared according to the procedure described in Example 6 was reacted in C₂H₄/H₂ mixtures at 600°C for 2 hours. The amounts of multi-faceted graphitic nanotubes formed and the average widths of the structures are given in Table 13 below. From these data it is apparent that the highest amounts of nanotubes are obtained from a reactant gas containing pure ethylene. As the fraction of hydrogen in the mixture is progressively increased so the amount of nanotubes formed exhibits a corresponding decrease.

**TABLE 13**

| **C2H4 : H2 ratio** | **(g-CNT/g-Catalyst)** | **Average width CNT (nm)** |
|---|---|---|
| 1:0 | 19.0 | 7.2 |
| 9:1 | 17.0 | 7.1 |
| 4:1 | 15.0 | 7.1 |
| 1:1 | 1.0 | 7.2 |

## Claims

1. A method for producing multifaceted graphitic non-cylindrical nanotubes, which method comprises:
i) reacting a mixture of CH₄ and O₂ in a mole ratio of 2:1 in the presence of a catalyst system comprising a mixture of a Co-containing oxide and at least one Group II metal oxide at a temperature of from 350° to 1000°C to produce a mixture of CO and H₂; and
ii) reacting at least a portion of the mixture of CO and H₂ in a weight ratio of 20:1 in the presence of an unsupported catalyst system comprising a mixture of a Co-containing metal oxide and a Group II metal oxide at temperatures of from 350° to 1000°C thereby producing multifaceted graphitic nanotubes.

2. The method of claim 1, wherein the catalyst is a mixture of Co₃O₄-Co₂MgO₄-CoMgO₂.

3. The method of claim 1, wherein the temperature of step ii) is from 550°C to 670°C.

4. The method of claim 1, wherein the mixture of CH₄ and O₂ is reacted at a temperature from 450°C to 1000°C.

5. The method of claim 1, wherein the weight ratio of CO to H₂ is about 10:1.

6. A multifaceted graphitic non-cylindrical nanotube comprising platelets oriented substantially parallel to the growth axis of the nanotube and having crystallinity of from 90% to 100% wherein the distance between graphite platelets is from 0.335 nm to 0.4 nm.

## Patentansprüche

1. Eine Methode zur Herstellung von mehrflächigen, graphithaltigen, nicht-zylindrischen Nanoröhren, die Folgendes beinhaltet:
i) Reaktion einer Mischung aus CH₄ und O₂ in einem Molverhältnis von 2:1 bei Vorhandensein eines Katalysatorsystems bestehend aus einem Gemisch aus einem CO-haltigen Oxid und mindestens einem Metalloxid der Gruppe II bei einer Temperatur zwischen 350° und 1000° zur Herstellung eines Gemisches aus CO und H₂; und
ii) Reaktion zumindest eines Teils des Gemisches aus CO und H₂ bei einem Massenverhältnis von 20:1 und bei Vorhandensein eines Katalysatorsystems ohne Träger bestehend aus einem Gemisch aus einem CO-haltigen Metalloxid und einem Metalloxid der Gruppe II bei Temperaturen zwischen 350° und 1000°C, wodurch mehrflächige, graphithaltige Nanoröhren hergestellt werden.

2. Die Methode von Anspruch 1, worin der Katalysator ein Gemisch aus CO₃O₄-CO₂MgO₄-CoMgO₂ ist.

3. Die Methode von Anspruch 1, worin die Temperatur von Schritt ii) zwischen 550°C und 670°C beträgt.

4. Die Methode von Anspruch 1, worin das Gemisch aus CH₄ und O₂ bei einer Temperatur zwischen 450°C und 1000°C reagiert.

5. Die Methode von Anspruch 1, worin das Massenverhältnis von CO zu H₂ etwa 10:1 beträgt.

6. Eine mehrflächige, graphithaltige, nicht-zylindrische Nanoröhre bestehend aus Plättchen, die im Wesentlichen parallel zur Wachstumsachse der Nanoröhre ausgerichtet sind und eine Kristallinität zwischen 90% und 100% aufweisen, wobei die Entfernung zwischen Graphitplättchen zwischen 0.335 nm und 0.4 nm beträgt.

## Revendications

1. Procédé de production de nanotubes graphitiques multi-facette non cylindriques, ledit procédé comprenant :
i) la réaction d'un mélange CH₄ et O₂ dans un rapport molaire de 2:1 en présence d'un système catalytique comprenant un mélange d'oxyde contenant du Co et au moins un oxyde de métal du Groupe II à une température de 350° à 1000 °C pour produire un mélange CO et H₂ ; et
ii) la réaction d'au moins une partie du mélange CO et H₂ dans un rapport de poids de 20:1 en présence d'un système catalytique non supporté comprenant un mélange d'oxyde de métal contenant du Co et un oxyde de métal du Groupe II à des températures de 350° à 1000 °C, ce qui produit des nanotubes graphitiques multi-facette.

2. Le procédé de la revendication 1, dans lequel le catalyseur est un mélange de Co₃O₄-Co₂MgO₄-CoMgO₂.

3. Le procédé de la revendication 1, dans lequel la température de l'étape ii) est comprise entre 550° et 670 °C.

4. Le procédé de la revendication 1, dans lequel la réaction du mélange de CH₄ et O₂ s'effectue à une température comprise entre 450° et 1000 °C.

5. Le procédé selon la revendication 1, dans lequel le rapport de poids de CO à H₂ est environ 10:1.

6. Un nanotube graphitique multi-facette non cylindrique comprenant des plaquettes essentiellement parallèles à l'axe de croissance du nanotube et ayant une cristallinité de 90% à 100%, dans lequel la distance entre les plaquettes de graphite est de 0,335 nm à 0,4 nm.
